# EUROPEAN PATENT SPECIFICATION

(11) **EP 0 548 225 B1**
(45) Date of publication and mention of the grant of the patent: **25.10.1995**
(21) Application number: 91916923.5
(22) Date of filing: 09.09.1991
(51) Int. Cl.: C08L 67/04

(54) **HEAT SHRINKABLE FILMS CONTAINING POLYHYDROXY ACIDS**
HITZE SCHRUMPFBARE FILME DIE POLYHYDROXYCARBONSÄUREN ENTHALTEN
FILMS RETRACTABLES A CHAUD CONTENANT DES ACIDES POLYHYDROXY

(30) Priority: 11.09.1990 US 580526
(43) Date of publication of application: 30.06.1993
(73) Proprietor: E.I. DU PONT DE NEMOURS AND COMPANY, Wilmington Delaware 19898 (US)
(72) Inventor: OSTAPCHENKO, George, Joseph, Wilmington, DE 19803 (US)
(74) Representative: Woodcraft, David Charles
(86) International application number: US9106298
(87) International publication number: WO9204412

(56) References cited:
- EP-A- 0 104 731
- WO-A-83/02451
- WO-A-90/01521
- DE-A- 3 723 758
- US-A- 3 892 821
- US-A- 4 661 530
- Kirk Othmer "Encyclopaedia of Chemical Technology" 3rd Edition, Vol. 10, pages 216-227

## Description

### BACKGROUND OF THE INVENTION

This invention relates to certain films and their preparation, which films comprise a major component of polyhydroxy acid (PHA) and a minor amount of one or more other compatible thermoplastic polymers.

High molecular weight polymers of hydroxy acids and cyclic dimer products of esterification, of 2-hydroxy acids, particularly glycolic acid and lactic acid, are well known to be degradable, and are found useful for disposable packaging that will substantially and readily deteriorate to harmless by-products under conditions existing in the natural environment. It is desirable for packaging material to possess additional beneficial physical properties including optical clarity, tensile strength, elasticity, resistance to puncture and, optionally, to be shrinkable. Shrinkable films are useful for "shrink-wrap" packaging. Shrink-wrapping is the process by which a film structure placed around an object contracts to provide a tight, protective, self-sealing container, upon application of convective or radiant heat. In order to make polyhydroxy acid films shrinkable, they must be oriented by mechanical stretching procedures.

Many high molecular weight polyhydroxy acids of commercial significance contain large proportions of specific asymmetrical carbon atoms and may be, therefore, appreciably crystalline and brittle. Such polymers are less able to withstand demanding film-forming and orientation processes without excessive film breakage causing low yield and productivity and films produced from then can become brittle on aging. A method of making polyhydroxy acid film pliable is to plasticize it by incorporating large amounts of monomeric and low molecular weight oligomeric 2-hydroxy acid species. However, such plasticized polyhydroxy acid compositions can be difficult to extrude into films because they stick to the film-making equipment, produce films of non-uniform thickness and the plasticizer often fouls the equipment. When successfully processed to film form, significantly plasticised polyhydroxy acid compositions, by themselves, have glass transition temperatures, Tg, which are near ambient temperatures and may not be stable under storage conditions found in warm climates. In addition, they may not have appropriate rate of degradation to maintain structural integrity for the intended useful life of the package.

Schneider discloses in U.S.-A-2,703,316 the manufacture of films from lactic acid, but does not disclose blends with other polymers.

Encyclopedia of Polymer Science and Engineering, Mark et al., 1987, Vol. 3, pp. 758-775 and Vol. 12, pp. 417-424 describe a variety of polymer blends, the morphology thereof, and improved selected properties that can be tailored into polymer blends. Neither of these references contain disclosures of polyhydroxyacid blends or the property of degradability.

It is desirable to provide significantly degradable compositions that may be processed economically, and with high yield, into optically clear, robust film for commercially useful packaging and other applications, which films may have a balance of physical properties that can be tailored for particular uses.

According to the present invention, there is now provided a biaxially-oriented, heat-shrinkable polymer film having a uniform thickness of from 0.01 to 2 mm which is formed from a polymer blend comprising:
(a) from 55 to 90 wt % of a polyhydroxy acid comprising units derived from glycolic acid, lactide or lactic acid, and
(b) from 10 to 45 wt % of one or more compatible thermoplastic polymers selected from copolyether esters and ethylene vinyl alcohol copolymers containing less than 50 mole percent ethylene.

Preferably, the film has a heat shrinkage value greater than 40% at 100°C.

The invention includes a process for making such polymer films which comprises:
(I) melt processing compatible thermoplastic polymeric materials while subjecting the melt to sufficient mechanical agitation to obtain a uniform composition, the polymer content of which comprises:
   (a) from 55 to 90 wt % polyhydroxy acid comprising units derived from glycolic acid, lactide, or lactic acid,
   (b) from 10 to 45% wt % of one or more compatible thermoplastic polymers selected from copolyether esters and ethylene vinyl alcohol copolymers containing less than 50 mole percent ethylene,
(II) forming the composition into a film of uniform thickness from 0.01 to 2 mm, and stretching the film to greater than two times its initial machine direction and transverse direction dimensions at a temperature above the polyhydroxy acid glass transition temperature and at least 5°C below the melting temperature of the composition.

The significant degradability of the films produced by this invention is achieved by use of polyhydroxy acids. "Polyhydroxy acids" as used herein means polymers containing at least one hydroxy acid unit or copolymers with non-hydroxy acid comonomers.

Examples of non-hydroxy acid comonomers includes those capable of condensation polymerization with lactide or lactic acid, i.e., lactones such as dodecanolactone, lactams and amino acids. For a more complete list see US-A-4,800,219 at column 9, line 27.

Polyhydroxy acids of this invention have molecular weights at least high enough to provide sufficient viscosity and strength to form sustainable film from the blended polymer melt. For the PHA, weight average molecular weights from 20,000 to 600,000, and preferably at least 50,000 and more preferably from 150,000 to 450,000, are effective in this invention. If the molecular weight is too high, excessive degradation occurs at the temperature required to melt process the compositions.

A preferred polyhydroxy acid may, for example, contain 67 mol% hydroxy acid unit in which 90 mol% of asymmetric carbon atoms are S- configuration. The other 33% of polyhydroxy acid component might be a suitable non-hydroxy acid comonomer. Or, the other 33% PHA might be additional hydroxy acid unit but the fraction of asymmetric carbon atoms which are S-configuration in the 33% can be no greater than that which when added to the S- atoms of the 67% PHA component, does not raise the total S- atom content of the total PHA above 97 mol%.

In deciding the relative R- and S- contents, consideration must also be given to having a PHA that has a melting point close to the melting point of the other compatible polymer so as to promote maximum processibility and ultimate product properties. Thus, in some compositions the very high content of R- may be less desirable because of melting points substantially different than the other polymer.

The terms "R-" and "S-" refer to the standard nomenclature for identifying stereoisomer configurations of asymmetrical carbon. The percentages of R- and S- carbons indicated herein refer only to fractions of asymmetrical carbon atoms in the polymer chains and not to total carbon atoms in the polymer chains. Asymmetrical carbon atoms are those having four different substituent groups attached to them.

The preferred compositions have narrow ranges of selected asymmetrical carbon atoms because polymers containing more equal fractions of R- and S-carbon atoms demonstrate accelerated degradation by hydrolysis, produce films adjacent layers of which often adhere to each other and which are prone to degradation during processing to form film.

Also, films made outside these ranges may be hazy and/or brittle. For example, polymer films having fractions above the 97% S- carbon atom range are substantially crystalline after hot processing, such as in film production. Crystallinity is detrimental to film-forming capability, to optical clarity of films formed from crystalline polymers and to the ability to successfully orient films formed by stretching if desired. Crystalline polymer films are also more brittle than amorphous polymer films. A method for reducing the negative effects of highly crystalline polymer on film properties is to slightly plasticize the polymer by having monomeric or low molecular weight cyclic or oligomeric species dispersed within the polymer matrix.

It has been found that excessive concentration of plasticizers in polyhydroxy acids is undesirable. It produces films of uneven thickness. Where films are made by casting onto drums, excessive plasticizer may separate from the film, stick to and foul the drum, or may cause the film to stick to the drum. Thus, it has been found necessary to use polymer containing a minimal amount of plasticizer. The amount of plasticizers that can be included in the films of this invention is from 0.10 to 8 wt%, and preferably from 0.2 to 6 wt% of the PHA content. A highly preferable composition range is from 0.2 to 0.4 wt% plasticizer. These plasticizer levels are based upon the concentrations of the polyhydroxy acid and plasticizer in the feedstock to the film production process and not necessarily to the concentrations of the plasticizer in the film produced from compositions of this invention. Plasticizer content may be determined by analysis methods taught in Journal of Applied Polymer Science, Kohn, Van den Berg, Van de Ridder and Feyen, volume 29, pages 4265-4277 (1984). When necessary to reduce the concentration of plasticizers in a plasticizer-rich composition, a devolatilizing extruder can be used either as a separate step or during film extrusion.

Non-polyhydroxy thermoplastic compatible polymers are those which are sufficiently compatible with PHA to produce biaxially oriented films having clarity that does not obscure or distort graphics on objects which have been wrapped by the biaxially oriented film or which have been packaged in heat set, non-shrinkable film. Compatible polymers are characterized as having a sufficient number and distribution of hydrophilic groups selected from among hydroxy, ester, amide, ether carboxyl, ionic carboxylate and urethane. Preferred non-polyhydroxy polymers of this invention are, copolyetheresters, and ethylene/vinyl alcohol copolymers. Particularly preferred are the low molecular weight polyesters that have a high degree of degradability.

Shrinkage value is an indicator of film shrinkage performance. It is determined by cutting a 10 cm by 10 cm square sample from oriented film with edges of the sample parallel to machine and transverse film directions; immersing the sample in boiling water for 1 minute; measuring and averaging the length and width of the boiled film; and calculating percent shrinkage value by subtracting the average boiled film length and width from 10, then multiplying the difference by 10. For example, assuming that the average of length and width dimensions of a boiled film sample is 6 cm, film shrinkage value is calculated as (10-6) times 10, or 40%.

It has been found that a particularly suitable compatible non-polyhydroxy acid for the purpose of this invention is a copolyetherester, which may be a copolyetherester elastomer commercially available from E. I. du Pont de Nemours & Company under the trademark "HYTREL". This copolyetherester elastomer consists essentially of a multiplicity of recurring intralinear long chain and short chain ester units connected head-to-tail through ester linkages, said long chain units being represented by the formula 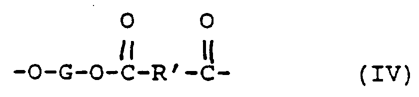
and short chain ester units being represented by the formula 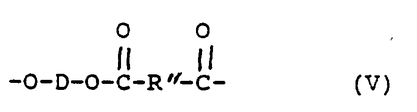
where G is a divalent radical remaining after the removal of terminal hydroxyl groups from a poly)alkylene oxide) glycol having an average molecular weight of 400 to 3500 and a ratio of the number of alkylene oxide carbon to oxygen atoms of 2 to 4.3, preferably 2.5 to 3.5; R' and R'' are divalent radicals remaining after removal of carboxyl groups from a dicarboxylic acid having a molecular weight less than 300; and D is a divalent radical remaining after the removal of hydroxyl groups from a diol having a molecular weight less than 250. Said copolyetherester has from 25 to 50 weight percent of short-chain ester units (V).

A particularly suitable copolyetherester of this type is one which contains about 25 weight percent of repeating units (IV) derived from 1,4-butylene terephthalate and 75 weight percent of repeating units (V) derived from poly(tetramethylene ether) glycol terephthalate. The poly(tetramethylene ether) glycol used to make the copolyetherester has a molecular weight of about 2000. This material is designated Copolyetherester A.

Another class of suitable non-polylactate polymers are ethylene/vinyl alcohol copolymers containing less than 50 mole % ethylene.

The term "degradable" as used here with respect to the polyhydroxy acids means that the degradable polyhydroxy acid portion of the material is biodegradable and, more importantly, degradable by hydrolysis. The degradation rate is consistent with its intended usage, i.e., the product does not degrade significantly in normal storage and usage, but will degrade in a reasonable time, after discarding. The hydrolysis degradation of a polymer can be tailored readily to meet the requirements of use and disposal of the film. It depends primarily on the nature of groups in the chains. Process conditions such as moisture, pH, temperature, ion strength, sunlight, enzymes, polymer crystallinity and hydrophilicity of the polymer affect degradation of the polymer, as is well known.

Rate of degradation of polyhydroxy acid polymers can be too great for many typical packaging applications (i.e., the packaging film will deteriorate excessively in less time than the expected shelf-life of the package, which includes the warehousing time of the packaging film between its production and application to the product). The reduced tensile strength of the film caused by the deterioration could result in film ruptures while being processed on shrink-wrap machinery and would be unacceptable for commercial packaging applications. Also, the amount of shrinkage or the resilience of the films may be inappropriete for particular uses. These deficiencies can be controlled by incorporating a non-poly hydroxy acid polymer in the polymer composition.

"Compatible polymer" as used herein means a non-PHA polymer that will blend with the PHA component sufficiently homogenously as not to exhibit gross symptoms of polymer segregation. A non-PHA polymer/PHA polymer blend that is heterogeneous on a microscopic level is considered incompatible (see Mack et al., Vol. 3, p. 759).

"Hazy" products, outside the scope of this invention, have impaired transparency caused by the exuding of low molecular weight plasticizer to the surfaces of the films, high crystalline content of the starting PLA polymer, or inadequate compatibility or lack of microhomogenous blending of the polymer blend.

Compositions of this invention are formed into films of uniform thickness from 0.01 to 2 mm. Film forming may be accomplished by melt extrusion and sheet casting, blow molding, precipitation from solvent or other means well known to produce films from polymers. If desired, films thus formed may be fed directly to orientation equipment or wound on spools or otherwise conveniently collected for storage and subsequent processing or use. These films normally have a tensile strength of 70-150 MPa and elongation at break of 50-90%.

Films useful in shrink-wrap packaging applications may be prepared from many of the blends of this invention by biaxially orienting the films. Biaxially orienting means to stretch the film in the direction which it travels, called the machine direction (MD), and in the direction 90 degrees to the machine direction in the plane of the film, known as the transverse or circumferential direction (TD), thereby extending the film to at least two times its initial MD and TD direction dimensions, while heating and maintaining film temperature above the polyhydroxyacid glass transition temperature of the PHA below the melting temperature of all polymer components of the film, normally at least 5% below the melting point. Biaxial orienting of this invention includes all conventional techniques including simultaneous MD and TD stretching, sequential stretching, and tube blowing.

The polyhydroxyacid glass transition temperature is measured by differential scanning calorimetry (DSC). It decreases with increasing plasticizer content and is about 60°C for a composition containing 0.28 wt% plasticizer but only 40°C for a composition containing 20 wt% plasticizer. High plasticizer concentrations have been found unacceptable because the glass transition temperatures produced therefrom are too near temperatures encountered during storage and transport in warm climate regions.

### EXAMPLES

This invention is now illustrated by representative examples of certain preferred embodiments thereof, where all parts, proportions, and percentages are by weight, unless otherwise indicated. All units of weight and measure other than SI units have been converted to SI units.

### EXAMPLE 1

A blend consisting of 65% of an 85-95% S-/5-15% R- optically active carbon content polylactide having about 6% plasticizer and molecular weight of about 350,000, and 35% of Copolyetherester A, is extruded into a film of 0.2 mm thickness. It is biaxially oriented by stretching 3X in the MD and TD at a temperature of 75°C to produce a film having shrinkage value in boiling water of 55%, a tensile strength of 73 MPa and an elongation at break of 58%.

### EXAMPLE 2

A blend consisting of 70% of polylactide having about 95% S-/5% R- optically active carbons, molecular weight of about 200,000 and about 2% plasticizer as determined by lactide content analysis, and 30% of ethylene/vinyl alcohol copolymer with ethylene content of 44 mole %, is extruded into a 0.23 mm thick film.

The film is biaxially oriented as described in Example 1 to produce a film having a shrinkage value of 42% in boiling water, tensile strength of 150 MPa and elongations at break of 85%. The biaxially oriented film has excellent shrink-wrap capability and no film degradation is observed after aging 12 months at room temperature, indicating significant shelf life for this film.

### EXAMPLE 3

Prior to heat-setting, a sample of the biaxially oriented film of Example 1 is wrapped around a 7.6 cm wide, 12.7 cm long, 0.64 cm high pad of paper and held in place with double-sided adhesive tape. The wrapped package is placed in a hot air convection oven at 100°C for one minute. The film shrinks uniformly around the pad and is optically clear and glossy.

## Claims

1. A biaxially oriented, heat-shrinkable polymer film having a uniform thickness of from 0.01 to 2 mm which is formed from a polymer blend comprising:
(a) from 55 to 90 wt % of a polyhydroxy acid comprising units derived from glycolic acid, lactide or lactic acid, and
(b) from 10 to 45 wt % of one or more compatible thermoplastic polymers selected from copolyether esters and ethylene vinyl alcohol copolymers containing less than 50 mole percent ethylene.

2. A film as claimed in claim 1 which has a shrinkage value greater than 40% at 100°C.

3. A film as claimed in claim 1 or 2 wherein the polymer component (b) is copolyether ester.

4. A film as claimed in any one of claims 1 to 3 wherein the component (b) is an ethylene/vinyl alcohol copolymer, containing less than 50 mole percent ethylene.

5. A film as claimed in any one of claims 1 to 4 having a tensile strength of 70 to 150 MPa and an elongation at break of 50 to 90%.

6. A film as claimed in any one of the preceding claims wherein the film contains from 0.2 to 6 wt % plasticizer.

7. A process for making a polymer film as claimed in claim 1, comprising:
(I) melt processing compatible thermoplastic polymeric materials while subjecting the melt to sufficient mechanical agitation to obtain a uniform composition, the polymer content of which comprises:
(a) from 55 to 90 wt % polyhydroxy acid comprising units derived from glycolic acid, lactide, or lactic acid,
(b) from 10 to 45% wt % of one or more compatible thermoplastic polymers selected from copolyether esters and ethylene vinyl alcohol copolymers containing less than 50 mole percent ethylene,
(II) forming the composition into a film of uniform thickness from 0.01 to 2 mm, and stretching the film to greater than two times its initial machine direction and transverse direction dimensions at a temperature above the polyhydroxy acid glass transition temperature and at least 5°C below the melting temperature of the composition.

8. A process as claimed in claim 7 wherein the polyhydroxy acid component has a weight average molecular weight from 20,000 to 600,000.

9. A process as claimed in claim 7 or 8 wherein the polyhydroxy acid component has a weight average molecular weight from 150,000 to 450,000.

10. A process as claimed in claim 9 wherein the polyhydroxy acid is polylactide and the asymmetric carbon atoms in the polymer chain are substantially exclusively R- or exclusively S- configurations.

## Patentansprüche

1. Biaxial ausgerichtete warmschrumpfbare Polymerfolie, die eine gleichmäßige Dicke von 0,01 bis 2 mm aufweist und aus einer Polymermischung geformt wird, umfassend:
(a) 55 bis 90 Gew.-% einer Polyhydroxysäure, umfassend Einheiten, die sich von Glycolsäure, Lactid oder Milchsäure ableiten, und
(b) 10 bis 45 Gew.-% von einem oder mehreren kompatiblen thermoplastischen Polymeren, ausgewählt aus Copolyetherestern und Ethylenvinylalkohol-Copolymeren, die weniger als 50 Mol-% Ethylen enthalten.

2. Folie nach Anspruch 1, die bei 100 °C einen Schrumpfwert von größer als 40 % aufweist.

3. Folie nach Anspruch 1 oder 2, worin die Polymerkomponente (b) Copolyetherester ist.

4. Folie nach einem der Ansprüche 1 bis 3, worin die Komponente (b) ein Ethylen/Vinylalkohol-Copolymer ist, das weniger als 50 Mol-% Ethylen enthält.

5. Folie nach einem der Ansprüche 1 bis 4, die eine Zugfestigkeit von 70 bis 150 MPa und eine Reißdehnung von 50 bis 90 % aufweist.

6. Folie nach einem der vorhergehenden Ansprüche, worin die Folie 0,2 bis 6 Gew.-% Weichmacher enthält.

7. Verfahren zur Herstellung einer Polymerfolie nach Anspruch 1, umfassend:
(I) Schmelzverarbeiten von kompatiblen thermoplastischen Polymermaterialien, während die Schmelze einer ausreichenden mechanischen Bewegung unterzogen wird, um eine gleichmäßige Zusammensetzung zu erhalten, deren Polymergehalt umfaßt:
(a) 55 bis 90 Gew.-% Polyhydroxysäure, umfassend Einheiten, die sich von Glycolsäure, Lactid oder Milchsäure ableiten,
(b) 10 bis 45 Gew.-% von einem oder mehreren kompatiblen thermoplastischen Polymeren, ausgewählt aus Copolyetherestern und Ethylenvinylalkohol-Copolymeren, die weniger als 50 Mol-% Ethylen enthalten,
(II) Formen der Zusammensetzung zu einer Folie von gleichmäßiger Dicke von 0,01 bis 2 mm, strecken der Folie um mehr als das Zweifache ihrer ursprünglichen Maschinenrichtungs- und Querrichtungsdimension bei einer Temperatur oberhalb der Polyhydroxysäure-Glastemperatur und bei wenigstens 5 °C unterhalb der Schmelztemperatur der Zusammensetzung.

8. Verfahren nach Anspruch 7, bei dem die Polyhydroxysäure-Komponente ein Gewichtsmittelmolekulargewicht von 20 000 bis 600 000 besitzt.

9. Verfahren nach Anspruch 7 oder 8, bei dem die Polyhydroxyäure-Komponente ein Gewichtsmittelmolekulargewicht von 150 000 bis 450 000 besitzt.

10. Verfahren nach Anspruch 9, bei dem die Polyhydroxysäure Polylactid ist und die asymmetrischen Kohlenstoffatome in der Polymerkette im wesentlichen ausschließlich R- oder ausschließlich S-Konfiguration aufweisen.

## Revendications

1. Une pellicule de polymère thermorétractable orientée biaxialement ayant une épaisseur uniforme de 0,01 à 2 mm, qui est formée à partir d'un mélange de polymères comprenant :
(a) 55 à 90 % en poids d'un poly(hydroxy-acide) comprenant des motifs dérivés d'acide glycolique, de lactide ou d'acide lactique, et
(b) 10 à 45 % en poids d'un ou plusieurs polymères thermoplastiques compatibles choisis parmi les copolyétheresters et les copolymères éthylène-alcool vinylique contenant moins de 50 moles pour cent d'éthylène.

2. Une pellicule telle que revendiquée dans la revendication 1, qui a un retrait supérieur à 40 % à 100°C.

3. Une pellicule telle que revendiquée dans la revendication 1 ou 2, dans laquelle le composant polymère (b) est un copolyétherester.

4. Une pellicule telle que revendiquée dans l'une quelconque des revendications 1 à 3, dans laquelle le composant (b) est un copolymère éthylène/alcool vinylique contenant moins de 50 moles pour cent d'éthylène.

5. Une pellicule telle que revendiquée dans l'une quelconque des revendications 1 à 4, ayant une résistance à la traction de 70 à 150 MPa et un allongement à la rupture de 50 à 90 %.

6. Une pellicule telle que revendiquée dans l'une quelconque des revendications précédentes, dans laquelle la pellicule contient 0,2 à 6 % en poids de plastifiant.

7. Un procédé de fabrication d'une pellicule de polymère telle que revendiquée dans la revendication 1, consistant à :
(I) travailler à l'état fondu des matières polymères thermoplastiques compatibles tout en soumettant la masse fondue à une agitation mécanique suffisante pour obtenir une composition homogène dont la portion polymère comprend :
(a) 55 à 90 % en poids de poly(hydroxy-acide) comprenant des motifs dérivés d'acide glycolique, de lactide ou d'acide lactique,
(b) 10 à 45 % en poids d'un ou plusieurs polymères thermoplastiques compatibles choisis parmi les copolyétheresters et les copolymères éthylène-alcool vinylique contenant moins de 50 moles pour cent d'éthylène,
(II) transformer la composition en une pellicule d'épaisseur uniforme de 0,01 à 2 mm, et étirer la pellicule à plus de deux fois ses dimensions initiales dans la direction machine et dans la direction transversale à une température supérieure à la température de transition vitreuse du poly(hydroxy-acide) et inférieure d'au moins 5°C à la température de fusion de la composition.

8. Un procédé tel que revendiqué dans la revendication 7, dans lequel le composant poly(hydroxy-acide) a un poids moléculaire moyen en poids de 20 000 à 600 000.

9. Un procédé tel que revendiqué dans la revendication 7 ou 8, dans lequel le composant poly(hydroxy-acide) a un poids moléculaire moyen en poids de 150 000 à 450 000.

10. Un procédé tel que revendiqué dans la revendication 9, dans lequel le poly(hydroxy-acide) est un polylactide et les atomes de carbone asymétriques de la chaîne polymère sont presque exclusivement en configuration R ou presque exclusivement en configuration S.
